(19) Europäisches Patentamt
European Patent Office
Office européen des brevets

(11) **EP 1 716 355 B1**

(12) **EUROPÄISCHE PATENTSCHRIFT**

(45) Veröffentlichungstag und Bekanntmachung des Hinweises auf die Patenterteilung:
**11.07.2007 Patentblatt 2007/28**

(21) Anmeldenummer: 05714993.2

(22) Anmeldetag: **18.02.2005**

(51) Int Cl.:
*F16J 1/16* *(2006.01)*    *F02F 3/00* *(2006.01)*

(86) Internationale Anmeldenummer:
**PCT/DE2005/000284**

(87) Internationale Veröffentlichungsnummer:
**WO 2005/078321 (25.08.2005 Gazette 2005/34)**

(54) **KOLBENBOLZENLAGER FÜR KOLBEN EINES VERBRENNUNGSMOTORS**

PISTON PIN BEARING FOR PISTONS OF AN INTERNAL COMBUSTION ENGINE

PALIER D'AXE POUR PISTON D'UN MOTEUR A COMBUSTION INTERNE

(84) Benannte Vertragsstaaten:
**DE FR GB IT**

(30) Priorität: **18.02.2004 DE 102004008097**

(43) Veröffentlichungstag der Anmeldung:
**02.11.2006 Patentblatt 2006/44**

(73) Patentinhaber: **MAHLE GMBH**
**D-70376 Stuttgart (DE)**

(72) Erfinder:
• **ISSLER, Wolfgang**
**71409 Schwaikheim (DE)**
• **ZUGSCHWERT, Günter**
**71732 Tamm (DE)**

(74) Vertreter: **Pohle, Reinhard et al**
**Mahle International GmbH**
**Patentabteilung ZRIP**
**Pragstrasse 26-46**
**D-70376 Stuttgart (DE)**

(56) Entgegenhaltungen:
DE-A1- 3 036 062       DE-A1- 3 301 366
DE-A1- 10 222 463

• **PATENT ABSTRACTS OF JAPAN Bd. 2003, Nr. 05, 12. Mai 2003 (2003-05-12) -& JP 2003 013800 A (TOYOTA INDUSTRIES CORP), 15. Januar 2003 (2003-01-15)**

**Beschreibung**

Die Erfindung betrifft ein Kolbenbolzenlager für Kolben eines Verbrennungsmotors mit Nabenbohrungen, in denen ein Kolbenbolzen gelagert ist.

Nabenbohrungen von Kolben für Verbrennungsmotoren belastungs- und verformungsgerecht zu gestalten, sind beispielsweise aus der DE 21 52 462 B2, DE 41 41 279 A1 und DE 30 36 062 C2 bekannt. Die dort genannten Formgebungen der Nabe resultieren aus der allgemeinen Erkenntnis, dass die auf den Kolbenboden einwirkenden Gaskräfte über die Bolzennaben auf den Kolbenbolzen übertragen werden, wodurch der Kolbenbolzen infolge seiner Drehbewegung im Pleuel periodisch durchgebogen wird. Nach der gängigen Annahme werden dadurch die Nabenbohrungen sowohl in der waagerechten als auch in der senkrechten Ebene, insbesondere aber im Zenit und Nadir der Nabenbohrung, auf Zug, Druck und Biegung beansprucht. Um dieser Deformation gerecht zu werden, schlägt die DE 21 52 462 B2 eine Nabenform vor, bei der die Mantellinie der Nabenbohrung gebogen, die Achse der Nabenbohrung zur Kolbenmitte hin einen leicht gekrümmten Verlauf aufweist und der Querschnitt der Bohrung oval geformt ist, wobei die kleine Halbachse des Ovals parallel zur Längsachse des Kolbens verläuft.

In der DE 30 36 062 C2 wird vorgeschlagen, dass die Nabenbohrungen im Querschnitt oval gestaltet sind und die große Halbachse des Ovals parallel zur Längsachse des Kolbens verläuft. Zusätzlich weist die von der Längsachse des Kolbens entfernte Seite der Nabenbohrungen eine größere und die der Längsachse des Kolbens benachbarte Seite eine kleinere Ovalität auf, wobei in einer weiteren Ausführung die Mantellinie im Scheitel der Bohrung geneigt ausgeführt ist.

Alle die vorgenannten Formgebungen verhindern jedoch in der Praxis nicht, dass mit steigender Belastung der Kolben durch steigende Zünddrücke Risse im Bereich des Muldenrandes sowie des Muldenbodens nach wenigen hundert Betriebsstunden entstehen können, deren Ursache in Deformationen von Kolbenbolzen und Kolben und daraus resultierenden Spannungen an den kritischen Stellen liegen kann. Um den Kolbenbolzen mehr Raum für Verformungen zu geben, wird in der DE 16 50 206 A1 eine ovale Nabenbohrung vorgeschlagen, bei der die große Achse des Ovals quer zur Längsachse des Kolbens zu liegen kommt. Damit soll gleichzeitig die Fresssicherheit und Geräuscharmut zwischen Kolbenbolzen und Nabenbohrung erhöht werden.

Aus der DE 102 22 463 A1 ist eine einseitig, nur im Äquator-Zenit-Äquator-Nabenbereich ausgeführte Hochovalität der Nabenbohrung bekannt, bei der die im Zenit der Nabenbohrung liegende Mantellinie des Ovals parallel zur Nabenbohrungsachse verläuft. Dadurch soll erreicht werden, dass die außerhalb der Kolbenachse liegenden Bereiche, also seitlichen Bereiche der Nabenbohrung, höher belastet werden. Damit ergibt sich - aufgrund des vergrößerten Hebelarmes bezogen auf die Bolzenachse - ein größeres Moment, das die Biegung des Kolbens um die Bolzenachse reduziert. Praktisch hat sich jedoch gezeigt, dass die Biegung des Kolbens um die Bolzenachse zwar reduziert, aber noch unbefriedigend ist.

Aufgabe der Erfindung ist es, eine gegenüber dem Stand der Technik verbesserte Nabenbohrungsform für ein Kolbenbolzenlager anzugeben, die eine deutliche Reduzierung mechanischer Spannungen im Kolben und damit auch eine Verlängerung der Kolbenlebensdauer zulässt. Außerdem soll durch die Formgebung eine Geräuschbildung im Kolbenbolzenlager vermieden werden.

Erfindungsgemäß wird die Aufgabe durch die Merkmale des Anspruchs 1 gelöst.

Durch die einseitig, nur im Äquator-Zenit-Äquator-Nabenbereich ausgeführte Hochovalität wird einerseits vorteilhaft erreicht, dass bei der erfindungsgemäßen Ausführung der hochovalen Bohrung die außerhalb der Kolbenachse liegenden Bereiche, also seitlichen Bereiche der Nabenbohrung, weit höher belastet werden. Damit ergibt sich - aufgrund des vergrößerten Hebelarmes bezogen auf die Bolzenachse - ein größeres Moment. Andererseits wird dieser Effekt gegenüber der DE 102 22 463 A1 insbesondere noch dadurch verbessert, dass die im Nabenzenit verlaufende Mantellinie der hochovalen Mantelfläche kolbenseitig von radial außen nach radial innen unter einem Winkel derart zur Nabenachse geneigt verläuft, dass die durch ihren Ovaldurchmesser definierte größte Ovalität jeweils an den inneren Enden der Nabenbohrungen entsteht und einen vorbestimmten Wert des Ovaldurchmessers nicht überschreitet. Daraus resultieren gegenüber dem bisherigen Stand der Technik geringere Tangentialspannungen am Muldenrand und Muldenboden der Verbrennungsmulde.

Andererseits wird durch die einseitig, nur im Äquator-Nadir-Äquator-Nabenbereich ausgeführte kreiszylindrische Form, bei dem die im Nadir der Nabenbohrung liegende Mantellinie des Zylinders nicht mehr parallel zur Nabenbohrungsachse verläuft, vorteilhaft erreicht, dass das Spiel zwischen Kolbenbolzen und Nabe bei dem Anlagewechsel des Kolbenbolzens von der Nabenoberseite auf die Nabenunterseite weiter minimiert wird.

Vorteilhafte Weiterbildungen sind Gegenstand der Unteransprüche.

Die Erfindung wird im folgenden anhand eines Ausführungsbeispiels näher erläutert. Es zeigt:

Fig. 1    einen Teillängsschnitt durch einen Kolben;
Fig. 2    einen Querschnitt der Nabenbohrung, geschnitten entlang der Linie AA;
Fig. 3    eine Detaildarstellung der Nabenbohrung gemäß Fig. 1.

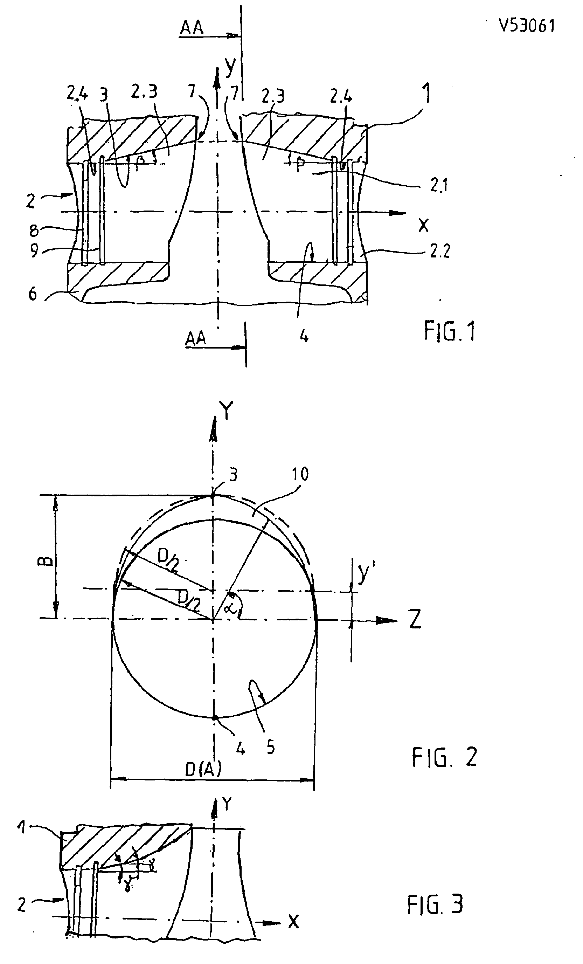

Wie aus Fig. 1 ersichtlich, weist ein Kolben 1 für einen Verbrennungsmotor eine Nabenbohrung 2 mit einem oberen Nabenbereich 2.1 und unteren Nabenbereich 2.2 auf, in der ein kreiszylindrischer Kolbenbolzen (nicht dargestellt) gelagert ist. Am kolbenseitig radial äußeren Ende der Nabenbohrung ist eine Bolzensicherungsnut 8 und eine Ölrille 9 angeordnet, wobei die Ölrille in der Nabenbohrung umfangsseitig umlaufend oder teilumlaufend ausgeführt sein kann. Gemäß der Figuren 1 und 2 ist der obere Nabenbereich auf der Gaskraftseite angeordnet, bei der die mit 5 bezeichnete Mantelfläche der Nabenbohrung 2 umfangsseitig entlang der Nabenachse x in einem Teilbereich 2.3 des Nabenäquator - Nabenzenit - Nabenäquator- Bereiches hochoval geformt ist und in einem Teilbereich 2.4 kreiszylinderförmig ausgebildet ist.

Die hochoval geformte Mantelfläche verläuft - im Querschnitt gemäß der Darstellung in Fig. 2 - in einem Bereich 10, der durch einen Halbkreis mit einem zwischen Nabenäquator- Nabennadir - Nabenäquator definierten Nabenbohrungsdurchmesser D und einen mit einem entlang der Kolbenachse y um mit y'= 0,03 Prozent bis 0,5 Prozent des definierten Nabendurchmessers D in Richtung Nabenzenit versetzten Halbkreises mit den Durchmesser D begrenzt ist. Bevorzugt folgt die einseitig hochovale Mantelfläche der Parameterdarstellung des Ovals

$$z = A/2 \cos \alpha\}$$

$$y = A/2 \sin \alpha + \tfrac{1}{2}(B - A/2) - \tfrac{1}{2}(B - A/2)\cos(2\alpha\} \quad \text{für} \quad 0° \le \alpha \le 180°,$$

wobei

B      großer Ovalhalbdurchmesser;
A= D   kleiner Ovaldurchmesser;
D      Durchmesser des zylindrischen Nabenteils;
$\alpha$      Winkel, den ein beliebiger Strahl gegen die x-Achse bildet.

Gemäß Fig.1 ist die im Nabenzenit verlaufende Mantellinie 3 der hochovalen Mantelfläche kolbenseitig von radial außen nach radial innen unter einem Winkel β derart zur Nabenachse x geneigt, dass die durch ihren Ovaldurchmesser 2*B definierte größte Ovalität jeweils an dem inneren Ende 7 der Nabenbohrung entsteht und einen vorbestimmten Wert des Ovaldurchmessers nicht überschreitet. Dieser wird im Ausführungsbeispiel durch den Wert y' festgelegt, definiert als Differenz zwischen großer Halbachse des Ovals und dem Kreisdurchmesser des unteren kreisförmigen Nabenbereiches 2.2. Da der Wert y' erfindungsgemäß bestimmt ist und der Verlauf der Mantellinie 3 entlang der x-Achse linear steigend von 0 Grad zwischen der Bolzensicherungsnut 8 und Ölrille 9 beginnt - wobei β gleich 0 Grad einen parallelen Verlauf der Mantellinie 3 zur x-Achse der Nabenbohrung anzeigt- wird der Steigungswinkel β entsprechend vorgegeben. Dieser Winkel kann sich gemäß weiterer Ausführungen, beispielsweise durch bevorzugte Verschiebung des Beginns der Steigung in Richtung Bolzensicherungsnut 8, verringern. Der Winkel kann bestimmt sein mit 0° ≤ β ≤ 1°.

Neben der vorgenannten Ausführungsform einer linearen Steigung der Mantellinie 3 ist ebenso eine polygone Ausführung, d.h., polygonale Steigung (Winkel γ) der Mantellinie mit jeweils 2,5 Winkelminuten Steigung pro Polygonabschnitt, wie in Fig. 3 angegeben, bis zum Erreichen des vorbestimmten Wertes des Ovaldurchmessers.

Für die gesamte Nabenbohrung gilt, dass die im Nadir liegende Mantellinien 4 parallel zur Nabenachse x, die senkrecht zur Kolbenachse y steht, verläuft. Zweckmäßigerweise beträgt die Ovalität 0,03 bis 0,5 % des Nabenbohrungsdurchmessers D. In einem weiteren nicht dargestellten Ausführungsbeispiel können die radialen äußeren Nabenbohrungsenden bombiert sein. Ebenso können die radial inneren Nabenbohrungsbereiche als Formbohrung, die sich nicht bis zu den radial äußeren Enden der Nabenbohrung 2 erstreckt, ausgeführt sein.

Durch die erfindungsgemäße Ausführung sind die Radialspannungen in den äußeren Bereichen der Nabenbohrung höher, so dass sich - aufgrund des vergrößerten Hebelarmes bezogen auf die Bolzenachse - ein größeres Moment ergibt, das die Biegung des Kolbens um die Bolzenachse reduziert. Daraus resultieren z.B. am Muldenrand geringere Tangentialspannungen, aber auch andere Bereiche der Verbrennungsmulde werden weniger belastet. Im Gegensatz zur eingangs genannten Erfindung DE 102 22 463 A1 werden hier diese Werte weiter verbessert. Insbesondere tragen die vorgenannten Spannungsreduzierungen am Muldengrund, Muldenrand in Bolzenrichtung (MuRaBoRi) und Kühlkanal-Mulde (KüKa) zu einer starken Lebensdauererhöhung der Kolben bei.

Bezugszeichen

1        Kolben
2        Nabenbohrung
2.1.     oberer Nabenbereich (hochoval)
2.2      unterer Nabenbereich (kreiszylindrisch)
2.3      Teilbereich der Nabenbohrung, hochoval
2.4      Teilbereich der Nabenbohrung, nicht hochoval
3        Zenit, Mantellinie im Zenit
4        Nadir, Mantellinie im Nadir
5        Mantelfläche der gesamten Nabenbohrung
6        Kolbenschaft
7        Inneres Ende der Nabenbohrung
8        Bolzensicherungsnut
9        Ölrille
10       Bereich
x        Nabenachse, Äquator
y        Kolbenachse
z        Nabenquerachse
y'       Differenz zwischen großer Halbachse des Ovals und Kreisdurchmesser des unteren Nabenbereiches

**Patentansprüche**

1.  Kolbenbolzenlager für Kolben eines Verbrennungsmotors mit Nabenbohrungen (2), in denen ein Kolbenbolzen lagerbar ist, wobei die Nabenbohrungen im Bereich Nabenäquator - Nabenzenit - Nabenäquator eine hochoval geformte Mantelfläche (2.1) und im Bereich Nabenäquator- Nabennadir - Nabenäquator eine kreiszylinderförmige Mantelfläche (2.2)aufweisen, deren im Nadir und Zenit verlaufende Mantellinien (3, 4) parallel zueinander ausgerichtet sind,
    **dadurch gekennzeichnet,**
    **dass** die im Nabenzenit verlaufende Mantellinie (3) der hochovale Mantelfläche kolbenseitig von radial außen nach radial innen unter einem Winkel (β) derart zur Nabenachse (Z) geneigt verläuft, dass die durch ihren Ovaldurchmesser definierte größte Ovalität jeweils an den inneren Enden (7) der Nabenbohrungen entsteht und einen vorbestimmten Wert des Ovaldurchmessers nicht überschreitet.

2.  Kolbenbolzenlager nach Anspruch 1, **dadurch gekennzeichnet, dass** die durch den Winkel (β) bestimmte Steigung der Mantellinie (3) nur einen Teilbereich (2.3) der Nabenbohrungen (2) umfasst.

3.  Kolbenbolzenlager nach Anspruch 1, **dadurch gekennzeichnet, dass** die durch den Winkel (β) bestimmte Steigung der Mantellinie (3) linear verläuft.

4.  Kolbenbolzenlager nach Anspruch 1, **dadurch gekennzeichnet, dass** die Steigung der Mantellinie polygonal mit einem jeweiligen Polygonwinkel von 2, 5 Winkelminuten verläuft.

5.  Kolbenbolzenlager nach Anspruch 2, **dadurch gekennzeichnet, dass** der nicht hochoval ausgeführte Teilbereich (2.4) der Nabenbohrungen (2.4) kreiszylindrisch ausgebildet sind.

6.  Kolbenbolzenlager nach Anspruch 1, **dadurch gekennzeichnet, dass** die Nabenbohrungen (2) Formbohrungsbereiche aufweisen.

7.  Kolbenbolzenlager nach Anspruch 1, **dadurch gekennzeichnet, dass** die hochoval geformte Mantelfläche in einem Bereich (10) verläuft, welcher durch einen Halbkreis mit einem zwischen Nabenäquator- Nabennadir - Nabenäquator definierten Nabenbohrungsdurchmesser (D) und einen mit einem entlang der Kolbenachse (Y) um 0,03 Prozent bis 0,5 Prozent des definierten Nabendurchmessers (D) in Richtung Nabenzenit versetzten Halbkreises mit Durchmesser (D) begrenzt ist.

8. Kolbenbolzenlager nach Anspruch 7, **dadurch gekennzeichnet, dass** der Versatz (Y') zwischen 0,03 und 0,5 Prozent, vorzugsweise 0,1 Prozent und 0,15 Prozent des Bolzendurchmessers beträgt.

9. Kolbenbolzenlager nach Anspruch 1, **dadurch gekennzeichnet, dass** in den Nabenbohrungen (2) Ölrillen, Taschen, Slots oder Ölbohrungen zur Zuführung von Schmieröl angeordnet sind.

**Claims**

1. Piston pin bearing for pistons of an internal combustion engine with hub bores (2), in which a piston pin can be mounted, wherein the hub bores in the region of the hub equator - hub zenith - hub equator have a high oval shaped casing surface (2.1) and in the region of the hub equator - hub nadir - hub equator have a cylindrical casing surface (2.2), the casing lines (3, 4) of which in the nadir and zenith are aligned parallel to one another,
**characterised in that**
the casing line (3) of the high oval casing surface at the hub zenith is inclined on the piston side from radially outwards to radially inwards at an angle (β) relative to the hub axis (Z), so that the greatest ovality defined by its oval diameter occurs at the inner ends (7) of the hub bores and does not exceed a predefined value of the oval diameter.

2. Piston pin bearing according to claim 1, **characterised in that** the inclination of the casing line (3) defined by the angle (β) only covers a partial section (2.3) of the hub bores (2).

3. Piston pin bearing according to claim 1, **characterised in that** the inclination of the casing line (3) defined by the angle (β) is linear.

4. Piston pin bearing according to claim 1, **characterised in that** the inclination of the casing line is polygonal with a respective polygon angle of 2.5 angular minutes.

5. Piston pin bearing according to claim 2, **characterised in that** the non-high oval shaped partial section (2.4) of the hub bores (2.4) is designed to be cylindrical.

6. Piston pin bearing according to claim 1, **characterised in that** the hub bores (2) have form boring areas.

7. Piston pin bearing according to claim 1, **characterised in that** the high oval shaped casing surface is in a section (10), which is delimited by a semi-circle with a hub bore diameter (D) defined between the hub equator - hub nadir - hub equator and a semi-circle with diameter (D) offset along the piston axis (Y) by 0.03 percent to 0.5 percent of the defined hub diameter (D) in the direction of the hub zenith.

8. Piston pin bearing according to claim 7, **characterised in that** the offset (Y') is between 0.03 and 0.5 percent, preferably 0.1 percent and 0.15 percent of the pin diameter.

9. Piston pin bearing according to claim 1, **characterised in that** in the hub bores (2) oil channels, pockets, slots or oil bores are arranged for feeding lubricating oil.

**Revendications**

1. Palier d'axe de piston pour des pistons d'un moteur à combustion interne comprenant des alésages de moyeu (2), dans lesquels peut être supporté un axe de piston, les alésages de moyeu présentant dans la zone équateur de moyeu - zénith de moyeu - équateur de moyeu une surface d'enveloppe (2.1) de forme ovale en hauteur et dans la zone équateur de moyeu - nadir de moyeu - équateur de moyeu une surface d'enveloppe (2.2) de forme cylindrique circulaire, dont les lignes d'enveloppe (3, 4) s'étendant au nadir et au zénith sont orientées parallèlement entre elles,
**caractérisé en ce**
**que** la ligne d'enveloppe (3) s'étendant au zénith de moyeu de la surface d'enveloppe ovale en hauteur s'étend de manière inclinée du côté piston de la direction radiale extérieure vers la direction radiale intérieure d'un angle (β) par rapport à l'axe du moyeu (Z), de telle sorte que le caractère ovale maximum défini par son diamètre d'ovale se trouve respectivement aux extrémités intérieures (7) des alésages de moyeu et ne dépasse pas par le haut une valeur prédéfinie du diamètre d'ovale.

**2.** Palier d'axe de piston suivant la revendication 1, **caractérisé en ce que** la pente définie par l'angle (β) de la ligne d'enveloppe (3) englobe seulement une zone partielle (2.3) des alésages de moyeu (2).

**3.** Palier d'axe de piston suivant la revendication 1, **caractérisé en ce que** la pente définie par l'angle (β) de la ligne d'enveloppe (3) s'étend linéairement.

**4.** Palier d'axe de piston suivant la revendication 1, **caractérisé en ce que** la pente de la ligne d'enveloppe s'étend de façon polygonale avec un angle de polygone respectif de 2,5 minutes angulaires.

**5.** Palier d'axe de piston suivant la revendication 2, **caractérisé en ce que** la zone partielle (2.4) réalisée de manière non ovale en hauteur (2.4) des alésages de moyeu (2.4) a une configuration cylindrique circulaire.

**6.** Palier d'axe de piston suivant la revendication 1, **caractérisé en ce que** les alésages de moyeu (2) présentent des zones d'alésages à forme.

**7.** Palier d'axe de piston suivant la revendication 1, **caractérisé en ce que** la surface d'enveloppe de forme ovale en hauteur s'étend dans une zone (10) qui est délimitée par un demi-cercle avec un diamètre (D) d'alésage de moyeu défini entre l'équateur de moyeu - le nadir de moyeu - l'équateur de moyeu et par un demi-cercle de diamètre (D) décalé le long de l'axe de piston (Y) de 0,03% à 0,5% du diamètre de moyeu défini (D) en direction du zénith de moyeu.

**8.** Palier d'axe de piston suivant la revendication 7, **caractérisé en ce que** le décalage (Y') est compris entre 0,03% et 0,5%, de préférence entre 0,1% et 0,15%, du diamètre d'axe.

**9.** Palier d'axe de piston suivant la revendication 1, **caractérisé en ce que** des sillons d'huile, des poches, des gorges ou des perçages d'huile pour l'arrivée d'huile lubrifiante sont disposés dans les alésages de moyeu (2).

V53061

FIG.1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2152462 B2
- DE 4141279 A1
- DE 3036062 C2
- DE 1650206 A1
- DE 10222463 A1